# EUROPÄISCHE PATENTSCHRIFT

(11) **EP 3 434 085 B1**
(45) Veröffentlichungstag und Bekanntmachung des Hinweises auf die Patenterteilung: **12.04.2023**
(21) Anmeldenummer: 18401060.1
(22) Anmeldetag: 16.07.2018
(51) Int. Cl.: A01B 15/14, A01B 63/112

(54) **VERFAHREN ZUM EINSTELLEN EINER ZUGLINIE**
METHOD FOR ADJUSTING A PULL LINE
PROCÉDÉ DE RÉGLAGE D'UNE LIGNE DE TRACTION

(30) Priorität: 24.07.2017 DE 102017116592
(43) Veröffentlichungstag der Anmeldung: 30.01.2019
(73) Patentinhaber: Amazonen-Werke H. Dreyer SE & Co. KG, 49205 Hasbergen (DE)
(72) Erfinder: Rahe, Florian, 49504 Lotte (DE); Laumann, Bernhard, 48477 Hörstel - Riesenbeck (DE); Albert, Jörn, 49080 Osnabrück (DE); Rehnen, Pascal, 49328 Melle (DE)

(56) Entgegenhaltungen:
- EP-A1- 3 178 302
- EP-A2- 1 252 806
- EP-B1- 0 364 751
- DE-A1- 3 504 865
- DE-A1- 3 540 832
- DE-C1- 19 608 140

## Beschreibung

Die Erfindung betrifft ein Verfahren zum Einstellen einer Zuglinie zwischen einer Zugmaschine und einem von der Zugmaschine gezogenen oder getragenen landwirtschaftlichen Bodenbearbeitungsgerät nach dem Oberbegriff des Patentanspruchs 1 und System umfassend eine Zugmaschine und ein landwirtschaftliches Bodenbearbeitungsgerät nach dem Oberbegriff des Patentanspruchs 10.

Bei der Verwendung von landwirtschaftlichen Bodenbearbeitungsgeräten kommt dem Einstellen einer geeigneten Zuglinie zwischen der Zugmaschine und dem landwirtschaftlichen Bodenbearbeitungsgerät eine besondere Bedeutung zu, da das Bearbeitungsergebnis, der Kraftstoffverbrauch der Zugmaschine und die Abnutzung des landwirtschaftlichen Bodenbearbeitungsgeräts von der eingestellten Zuglinie abhängen.

Aus dem Stand der Technik sind demnach unterschiedliche Konzepte zum Einstellen der Zuglinie zwischen einer Zugmaschine und einem landwirtschaftlichen Bodenbearbeitungsgerät bekannt. Beispielsweise offenbart die Druckschrift DE 33 45 231 C1 die Möglichkeit, die auf die Unterlenker der Zugmaschine wirkenden Zugkräfte zu erfassen und abhängig von den erfassten Zugkräften den Zugpunkt eines Pflugs mittels eines linearen Stellglieds einzustellen.

Darüber hinaus ist aus der Druckschrift EP 1 252 806 A2 eine Zugpunktanpassung für einen Pflug bekannt, bei welcher mittels Sensoren die Lage des Pflugs relativ zum Zugfahrzeug ermittelt und der Zugpunkt abhängig von der ermittelten Lage automatisch eingestellt wird.

Ferner ist aus der Druckschrift DE 35 23 748 A1 ein Zuggespann bekannt, bei welchem die auf eine Zugvorrichtung einer Zugmaschine wirkenden Zugkräfte ermittelt werden, um auf Grundlage der ermittelten Zugkräfte den Zugpunkt entsprechend einstellen zu können.

Bei der in der Druckschrift EP 0 364 751 B1 offenbarten Lösung werden die auf die Anlagen eines Pflugs wirkenden Kräfte erfasst, sodass diese durch eine Verschiebung des Zugpunktes entsprechend minimiert werden können. Die Verschiebung des Zugpunktes erfolgt dabei mittels eines längenveränderlichen Stellglieds.

Diese und andere bekannte Lösungen zum Einstellen einer Zuglinie zwischen einer Zugmaschine und einem landwirtschaftlichen Bodenbearbeitungsgerät sind jedoch zu aufwändig, fehleranfällig und/oder unpräzise.

Die der Erfindung zugrunde liegende Aufgabe besteht somit darin, das Einstellen der Zuglinie zwischen einer Zugmaschine und einem landwirtschaftlichen Bodenbearbeitungsgerät zu vereinfachen.

Die Aufgabe wird gelöst durch ein Verfahren der eingangs genannten Art, wobei die Ausrichtung eines oder mehrerer Lenker einer Kupplungseinrichtung der Zugmaschine erfasst und die Ausrichtung mehrerer Führungselemente des landwirtschaftlichen Bodenbearbeitungsgeräts relativ zu einem Tragrahmen des landwirtschaftlichen Bodenbearbeitungsgeräts in Abhängigkeit der erfassten Ausrichtung des einen oder der mehreren Lenker der Kupplungseinrichtung der Zugmaschine selbsttätig eingestellt wird. Die Führungselemente des landwirtschaftlichen Bodenbearbeitungsgeräts stehen dabei mit dem zu bearbeitenden Boden in Kontakt.

Die Erfindung macht sich die Erkenntnis zunutze, dass durch eine Zuglinieneinstellung, welche von der Ausrichtung des einen oder der mehreren Lenker der Kupplungseinrichtung der Zugmaschine abhängig ist, das Erfassen von Zugkräften, welche während des Bearbeitungsvorgangs an der Kupplungseinrichtung wirken, nicht länger notwendig ist. Hierdurch kann auf aufwändige und fehleranfällige Kraftmesssysteme zur Zugpunkteinstellung verzichtet werden. Die Erfassung der Lenkerausrichtung kann ohne hohen technischen Aufwand umgesetzt werden und zeichnet sich durch eine geringe Fehleranfälligkeit aus. Die Zuglinieneinstellung wird somit durch das erfindungsgemäße Verfahren verbessert und vereinfacht.

Das landwirtschaftliche Bodenbearbeitungsgerät kann beispielsweise als Pflug, insbesondere als Anbaudrehpflug ausgebildet sein. Durch das Einstellen der Ausrichtung der Führungselemente des landwirtschaftlichen Bodenbearbeitungsgeräts relativ zu dem Tragrahmen des landwirtschaftlichen Bodenbearbeitungsgeräts wird die Zuglinie zwischen der Zugmaschine und dem landwirtschaftlichen Bodenbearbeitungsgerät verändert. Das Verändern der Zuglinie zwischen der Zugmaschine und dem landwirtschaftlichen Bodenbearbeitungsgerät erfolgt dadurch, dass das Einstellen der Ausrichtung der Führungselemente des landwirtschaftlichen Bodenbearbeitungsgeräts eine geringe Verdrehung des gesamten landwirtschaftlichen Bodenbearbeitungsgeräts um eine aufrechte Achse relativ zu der Zugmaschine bewirkt, um die Führungselemente des landwirtschaftlichen Bodenbearbeitungsgeräts wieder annähernd parallel zur Fahrtrichtung auszurichten. Das Einstellen der Ausrichtung der Führungselemente, insbesondere das Verdrehen der Führungselemente, führt zu einer Änderung der Unterlenkerpositionen der Kupplungseinrichtung der Zugmaschine, wodurch sich der Zugpunkt und folglich die Zuglinie ändert. Die Zuglinie ist die Verbindungslinie zwischen dem Schnittpunkt der verlängerten Unterlenker der Kupplungseinrichtung der Zugmaschine und dem geometrischen Mittelpunkt des landwirtschaftlichen Bodenbearbeitungsgeräts. Die Kupplungseinrichtung der Zugmaschine ist mit einer Kupplungseinheit des landwirtschaftlichen Bodenbearbeitungsgeräts verbunden, wobei die Kupplungseinheit des landwirtschaftlichen Bodenbearbeitungsgeräts auch als Tragbock bezeichnet werden kann. Das Einstellen der Ausrichtung der Führungselemente des landwirtschaftlichen Bodenbearbeitungsgeräts relativ zu dem Tragrahmen des landwirtschaftlichen Bodenbearbeitungsgeräts bzw. das Einstellen der Zuglinie kann beim Arbeiten am Hang, beim Arbeiten mit Packer, bei verändertem Spurinnenmaß oder veränderter Spurbreite an der Zugmaschine und/oder nach dem Ändern der Arbeitsbreite oder der Vorderfurchenbreite notwendig sein. Das Spurinnenmaß oder die Spurbreite kann sich ändern, wenn das landwirtschaftliche Bodenbearbeitungsgerät mit unterschiedlichen Zugmaschinen verwendet wird. Beim Wechsel der Zugmaschine besteht somit regelmäßig auch die Notwendigkeit die Zuglinie neu einzustellen. Vorzugsweise bewirkt das Einstellen der Ausrichtung der Führungselemente des landwirtschaftlichen Bodenbearbeitungsgeräts relativ zu dem Tragrahmen des landwirtschaftlichen Bodenbearbeitungsgeräts keine Veränderung des Anlagendrucks. Die Ausrichtung der Führungselemente des landwirtschaftlichen Bodenbearbeitungsgeräts relativ zu dem Tragrahmen des landwirtschaftlichen Bodenbearbeitungsgeräts ist derart einzustellen, dass der Traktor mit einem möglichst geringen Seitenzug läuft. Aufgrund geringer Seitenkräfte wird der Kraftstoffverbrauch während des Bearbeitungsvorgangs verringert und die mechanische Beanspruchung des landwirtschaftlichen Bodenbearbeitungsgeräts reduziert, woraus sich eine gesteigerte Lebensdauer und ein geringeres Ausfallrisiko aufgrund einer Beschädigung ergeben.

In einer bevorzugten Ausführungsform des erfindungsgemäßen Verfahrens i sind die Führungselemente jeweils als Anlageblech einer Pflugkörperanordnung ausgebildet und die jeweiligen Pflugkörperanordnungen sind an dem Tragrahmen des landwirtschaftlichen Bodenbearbeitungsgeräts befestigt. Die Verstellung der Führungselemente gegenüber dem Tragrahmen erfolgt vorzugsweise derart, dass beim Ausrichten der Führungselemente gegenüber dem Tragrahmen gleichzeitig die jeweiligen Pflugkörper gegenüber dem Tragrahmen ausgerichtet werden. In diesem Fall sind jeweils ein Führungselement und ein Pflugkörper einer Verstelleinheit zugeordnet, welche einheitlich mittels einer zentralen Verstelleinrichtung gegenüber dem Tragrahmen verdreht werden kann. Vorzugsweise werden durch die zentrale Verstelleinrichtung sämtliche Führungselemente des landwirtschaftlichen Bodenbearbeitungsgeräts gleichzeitig verstellt. Die Pflugkörper können als Streichbleche ausgebildet sein.

In einer Weiterbildung des erfindungsgemäßen Verfahrens umfasst das selbsttätige Einstellen der Ausrichtung der Führungselemente des landwirtschaftlichen Bodenbearbeitungsgeräts relativ zu dem Tragrahmen des landwirtschaftlichen Bodenbearbeitungsgeräts ein Verdrehen der Führungselemente des landwirtschaftlichen Bodenbearbeitungsgeräts relativ zu dem Tragrahmen des landwirtschaftlichen Bodenbearbeitungsgeräts. Das Verdrehen der Führungselemente des landwirtschaftlichen Bodenbearbeitungsgeräts relativ zu dem Tragrahmen des landwirtschaftlichen Bodenbearbeitungsgeräts erfolgt dabei vorzugsweise jeweils um eine aufrechte und vorzugsweise im Wesentlichen vertikale Drehachse. Durch das Verdrehen der Führungselemente des landwirtschaftlichen Bodenbearbeitungsgeräts wird eine geringe Verdrehung des gesamten landwirtschaftlichen Bodenbearbeitungsgeräts um eine aufrechte Achse relativ zu der Zugmaschine bewirkt, um die Führungselemente des landwirtschaftlichen Bodenbearbeitungsgeräts wieder annähernd parallel zur Fahrtrichtung auszurichten.

In einer anderen bevorzugten Ausführungsform des erfindungsgemäßen Verfahrens umfasst das Erfassen der Ausrichtung des einen oder der mehreren Lenker der Kupplungseinrichtung der Zugmaschine das Erfassen der Ausrichtung eines ersten Unterlenkers der Kupplungseinrichtung der Zugmaschine, das Erfassen der Ausrichtung eines zweiten Unterlenkers der Kupplungseinrichtung der Zugmaschine und/oder das Erfassen der Ausrichtung einer Achse, welche die Koppelpunkte des ersten Unterlenkers und des zweiten Unterlenkers der Kupplungseinrichtung der Zugmaschine miteinander verbindet. Alternativ oder zusätzlich kann das Erfassen der Ausrichtung des einen oder der mehreren Lenker der Kupplungseinrichtung der Zugmaschine das Erfassen der Ausrichtung eines Oberlenkers der Kupplungseinrichtung der Zugmaschine umfassen. Insbesondere ist die Kupplungseinrichtung der Zugmaschine als Dreipunkt-Kraftheber ausgebildet. Über die Ausrichtung des ersten Unterlenkers, des zweiten Unterlenkers und/oder des Oberlenkers der Kupplungseinrichtung der Zugmaschine lässt sich erfassen, ob die Zuglinie zwischen der Zugmaschine und dem landwirtschaftlichen Bodenbearbeitungsgerät für die vorliegende Betriebssituation geeignet ist. Vorzugsweise wird eine symmetrische Ausrichtung der Unterlenker gegenüber der Fahrzeugmitte angestrebt. Der Oberlenker der Kupplungseinrichtung der Zugmaschine weist auf eine für die vorliegende Betriebssituation geeignete Zuglinie zwischen der Zugmaschine und dem landwirtschaftlichen Bodenbearbeitungsgerät hin, wenn der Oberlenker in der Draufsicht in Fahrtrichtung steht.

Das erfindungsgemäße Verfahren wird ferner dadurch vorteilhaft weitergebildet, dass das Erfassen der Ausrichtung des einen oder der mehreren Lenker der Kupplungseinrichtung der Zugmaschine mittels einer Winkelmesseinrichtung und/oder einer Wegmesseinrichtung erfolgt. Die Winkelmesseinrichtung kann eine oder mehrere Winkelsensoren, Neigungssensoren und/oder Kameras umfassen. Mittels der Wegmesseinrichtung kann beispielsweise geprüft werden, ob der erste Unterlenker und der zweite Unterlenker den gleichen Abstand zur Mittelachse der Zugmaschine oder zu den auf der entsprechenden Seite der Zugmaschine angeordneten Reifen der Zugmaschine aufweisen. Vorzugsweise sind der erste Unterlenker und der zweite Unterlenker spiegelsymmetrisch gegenüber der Mittelachse der Zugmaschine angeordnet.

In einer anderen bevorzugten Ausführungsform des erfindungsgemäßen Verfahrens erfolgt das selbsttätige Einstellen der Ausrichtung der Führungselemente des landwirtschaftlichen Bodenbearbeitungsgeräts relativ zu dem Tragrahmen des landwirtschaftlichen Bodenbearbeitungsgeräts derart, dass die Kupplungseinheit des landwirtschaftlichen Bodenbearbeitungsgeräts die Unterlenker der Kupplungseinrichtung der Zugmaschine im Wesentlichen symmetrisch zu der Mittelachse der Zugmaschine ausrichtet. Vorzugsweise ist das landwirtschaftliche Bodenbearbeitungsgerät derart ausgebildet, dass die eingestellte Zuglinie zwischen der Zugmaschine und dem landwirtschaftlichen Bodenbearbeitungsgerät für die vorliegende Bearbeitungssituation optimal ist, wenn die Unterlenker der Kupplungseinrichtung der Zugmaschine im Wesentlichen symmetrisch, insbesondere spiegelsymmetrisch, zu der Mittelachse der Zugmaschine ausgerichtet sind. Von der angestrebten im Wesentlichen symmetrischen Ausrichtung der Unterlenker zu der Mittelachse der Zugmaschine wird vorzugsweise abgewichen, wenn zusätzliche Seitenkräfte auftreten, beispielsweise durch das Arbeiten am Hang oder durch die Verwendung eines Packers.

In einer weiteren bevorzugten Ausführungsform des erfindungsgemäßen Verfahrens erfolgt das selbsttätige Einstellen der Ausrichtung der Führungselemente des landwirtschaftlichen Bodenbearbeitungsgeräts relativ zu dem Tragrahmen des landwirtschaftlichen Bodenbearbeitungsgeräts mittels eines oder mehrerer längenveränderlicher Einstellglieder. Das eine oder die mehreren längenveränderlichen Einstellglieder können als ansteuerbare Spindeln oder als ansteuerbare Einstellzylinder ausgebildet sein. Dabei können mehrere oder sämtliche Führungselemente durch ein gemeinsames Einstellglied eingestellt werden. Alternativ kann jedes Führungselement durch ein eigenes Einstellglied eingestellt werden. Vorzugsweise ist das eine oder sind die mehreren Einstellglieder mit einer Steuerungseinheit verbunden, welche auf Grundlage eines geeigneten Steuerungsbefehls die Einstellung, insbesondere die Verdrehung, der Führungselemente durch das eine oder die mehreren Einstellglieder verursachen kann. Das eine oder die mehreren Einstellglieder können mit einer Stange verbunden sein, welche parallel zum Tragrahmen des landwirtschaftlichen Bodenbearbeitungsgeräts verläuft. Die Stange kann wiederum mit mehreren oder sämtlichen Pflugkörperanordnungen verbunden sein, wobei die Pflugkörperanordnungen jeweils ein Führungselement umfassen. Durch eine Längenveränderung des einen oder der mehreren Einstellglieder wird die Stange verfahren. Die Stangenbewegung wird auf die Pflugkörperanordnungen übertragen, wodurch die Führungselemente der Pflugkörperanordnungen relativ zu dem Tragrahmen des landwirtschaftlichen Bodenbearbeitungsgeräts ausgerichtet werden.

Bevorzugt ist außerdem ein erfindungsgemäßes Verfahren, welches das Erfassen der Neigung der zu bearbeitenden Fläche, das Erfassen der Neigung der Zugmaschine und/oder das Erfassen der Verwendung eines Zusatzgeräts, insbesondere eines Packers, umfasst. Das selbsttätige Einstellen der Ausrichtung der Führungselemente des landwirtschaftlichen Bodenbearbeitungsgeräts relativ zu dem Tragrahmen des landwirtschaftlichen Bodenbearbeitungsgeräts erfolgt dabei zusätzlich in Abhängigkeit der Neigung der zu bearbeitenden Fläche, der Neigung der Zugmaschine und/oder der Verwendung eines Zusatzgeräts, insbesondere eines Packers. Das Erfassen der Neigung der zu bearbeitenden Fläche und/oder der Neigung der Zugmaschine kann beispielsweise mittels Neigungs- und/oder Beschleunigungssensoren erfolgen. Das Erfassen der Verwendung eines Zusatzgeräts kann durch einen oder mehrere im Bereich der Kupplung des Zusatzgeräts angeordnete Kraftaufnehmer und/oder eine oder mehrere Kameras erfolgen. Durch die Berücksichtigung der Neigung der zu bearbeitenden Fläche, der Neigung der Zugmaschine und/oder der Verwendung eines Zusatzgerätes kann die Einstellung der Zuglinie zwischen der Zugmaschine und dem landwirtschaftlichen Bodenbearbeitungsgerät in einem noch höheren Maße an die vorliegende Bearbeitungssituation angepasst werden, sodass die entstehenden Seitenkräfte und somit der Kraftstoffverbrauch und der Materialverschleiß an dem landwirtschaftlichen Bodenbearbeitungsgerät nochmals verringert werden.

In einer besonders bevorzugten Ausführungsform des erfindungsgemäßen Verfahrens werden die Spurbreite und/oder das Spurinnenmaß der Zugmaschine, die Arbeitsbreite des landwirtschaftlichen Bodenbearbeitungsgeräts und/oder die Vorderfurchenbreite des landwirtschaftlichen Bodenbearbeitungsgeräts erfasst. Die Spurbreite und/oder das Spurinnenmaß der Zugmaschine, die Arbeitsbreite des landwirtschaftlichen Bodenbearbeitungsgeräts und/oder die Vorderfurchenbreite des landwirtschaftlichen Bodenbearbeitungsgeräts kann beispielsweise auch auf Basis einer manuellen Eingabe durch einen Maschinenbediener erfasst werden. Das selbsttätige Einstellen der Führungselemente des landwirtschaftlichen Bodenbearbeitungsgeräts relativ zu dem Tragrahmen des landwirtschaftlichen Bodenbearbeitungsgeräts erfolgt dabei zusätzlich in Abhängigkeit der Spurbreite und/oder des Spurinnenmaßes der Zugmaschine, der Arbeitsbreite des landwirtschaftlichen Bodenbearbeitungsgeräts und/oder der Vorderfurchenbreite des landwirtschaftlichen Bodenbearbeitungsgeräts. Die Spurbreite und/oder das Spurinnenmaß der Zugmaschine können beispielsweise auf einem internen Speicher der Zugmaschine hinterlegt sein, sodass das Erfassen der Spurbreite und/oder des Spurinnenmaßes durch ein Abrufen der Spurbreite und/oder des Spurinnenmaßes von dem internen Speicher erfolgt. Das Erfassen der Arbeitsbreite und/oder der Vorderfurchenbreite kann durch geeignete Sensoren erfolgen, welche die Maschinenkonfiguration des landwirtschaftlichen Bodenbearbeitungsgeräts überwachen. Alternativ oder zusätzlich kann die Arbeitsbreite und/oder die Vorderfurchenbreite auch über eine oder mehrere Kameras erfasst werden. Durch die Berücksichtigung der Spurbreite und/oder des Spurinnenmaßes der Zugmaschine, der Arbeitsbreite des landwirtschaftlichen Bodenbearbeitungsgeräts und/oder der Vorderfurchenbreite des landwirtschaftlichen Bodenbearbeitungsgeräts kann die Zuglinie zwischen der Zugmaschine und dem landwirtschaftlichen Bodenbearbeitungsgerät noch präziser an die vorliegende Betriebssituation angepasst werden, sodass die Seitenkräfte und somit der Kraftstoffverbrauch und der Verschleiß an dem landwirtschaftlichen Bodenbearbeitungsgerät weiter verringert werden.

Die der Erfindung zugrunde liegende Aufgabe wird ferner durch ein System umfassend eine Zugmaschine und ein landwirtschaftliches Bodenbearbeitungsgerät der eingangs genannten Art gelöst, wobei das erfindungsgemäße landwirtschaftliche Bodenbearbeitungsgerät eine Steuerungseinrichtung aufweist, welche dazu eingerichtet ist, einen Steuerungsbefehl zum selbsttätigen Einstellen der Ausrichtung mehrerer Führungselemente, welche im Betrieb des landwirtschaftlichen Bodenbearbeitungsgeräts mit dem zu bearbeitenden Boden in Kontakt stehen, relativ zu dem Tragrahmen in Abhängigkeit der Ausrichtung eines oder mehrerer Lenker der Kupplungseinrichtung der Zugmaschine zu erzeugen. Das durch den Steuerungsbefehl bedingte selbsttätige Einstellen der Ausrichtung der Führungselemente umfasst vorzugsweise das Verdrehen der Führungselemente relativ zu dem Tragrahmen des landwirtschaftlichen Bodenbearbeitungsgeräts. Hinsichtlich weiterer Vorteile und Modifikationen des erfindungsgemäßen landwirtschaftlichen Bodenbearbeitungsgeräts wird zunächst auf die Vorteile und Modifikationen des erfindungsgemäßen Verfahrens verwiesen.

In einer besonders bevorzugten Ausführungsform des erfindungsgemäßen Systems sind die Führungselemente jeweils als Anlageblech einer Pflugkörperanordnung ausgebildet und die jeweiligen Pflugkörperanordnungen sind an dem Tragrahmen des landwirtschaftlichen Bodenbearbeitungsgeräts befestigt. Die Verstellung der Führungselemente bedingt vorzugsweise die Verstellung der den jeweiligen Führungselementen zugeordneten Pflugkörper.

Vorteilhaft ist ferner ein erfindungsgemäßes System, welches eine Erfassungseinrichtung aufweist, welche dazu eingerichtet ist, die Ausrichtung des einen oder der mehreren Lenker der Kupplungseinrichtung der Zugmaschine zu erfassen. Alternativ kann die Erfassungseinrichtung auch ein Bestandteil der Zugmaschine sein. Die Erfassungseinrichtung kann als Winkelmesseinrichtung ausgebildet sein und/oder einen oder mehrere Winkelsensoren, Neigungssensoren und/oder Kameras umfassen. Die Erfassungseinrichtung kann auch als Wegmesseinrichtung ausgebildet sein.

Eine andere bevorzugte Ausführungsform des erfindungsgemäßen Systems umfasst ein oder mehrere längenveränderliche Einstellglieder, welche signalleitend mit der Steuerungseinrichtung verbunden und dazu eingerichtet sind, die Ausrichtung der Führungselemente relativ zu dem Tragrahmen auf Grundlage des Steuerungsbefehls der Steuerungseinrichtung einzustellen. Das eine oder die mehreren längenveränderlichen Einstellglieder können als ansteuerbare Spindeln oder ansteuerbare Einstellzylinder ausgebildet sein. Das eine oder die mehreren längenveränderlichen Einstellglieder können jeweils zum Ausrichten von nur einem Führungselement oder von mehreren Führungselementen ausgebildet sein. Ferner können auch sämtliche Führungselemente von einem längenveränderlichen Einstellglied einstellbar sein.

Eine Weiterbildung des erfindungsgemäßen Systems weist eine Erfassungseinrichtung auf, welche dazu eingerichtet ist, die Neigung der zu bearbeitenden Fläche, die Neigung der Zugmaschine und/oder die Verwendung eines Zusatzgerätes, insbesondere eine Packers, zu erfassen, wobei die Steuerungseinrichtung dazu eingerichtet ist, den Steuerungsbefehl zum selbsttätigen Einstellen der Ausrichtung der Führungselemente relativ zu dem Tragrahmen auch in Abhängigkeit der Neigung der zu bearbeitenden Fläche, der Neigung der Zugmaschine und/oder der Verwendung eines Zusatzgeräts, insbesondere eines Packers, zu erzeugen. Die Erfassungseinrichtung kann eine oder mehrere Neigungs- und/oder Beschleunigungssensoren, einen oder mehrere Kraftaufnehmer und/oder eine oder mehrere Kameras umfassen.

Außerdem ist ein erfindungsgemäßes System bevorzugt, welches eine Erfassungseinrichtung aufweist, welche dazu eingerichtet ist, die Spurbreite und/oder das Spurinnenmaß der Zugmaschine, die Arbeitsbreite des landwirtschaftlichen Bodenbearbeitungsgeräts und/oder die Vorderfurchenbreite des landwirtschaftlichen Bodenbearbeitungsgeräts zu erfassen, wobei die Steuerungseinrichtung dazu eingerichtet ist, den Steuerungsbefehl zum selbsttätigen Einstellen der Ausrichtung der Führungselemente relativ zu dem Tragrahmen auch in Abhängigkeit der Spurbreite und/oder des Spurinnenmaßes der Zugmaschine, der Arbeitsbreite des landwirtschaftlichen Bodenbearbeitungsgeräts und/oder der Vorderfurchenbreite des landwirtschaftlichen Bodenbearbeitungsgeräts zu erzeugen. Die Erfassungseinrichtung kann eine oder mehrere Neigungs- und/oder Beschleunigungssensoren, einen oder mehrere Kraftaufnehmer und/oder eine oder mehrere Kameras umfassen.

Weitere Einzelheiten der Erfindung sind der Figurenbeschreibung und den Zeichnungen zu entnehmen. Es zeigen
- Fig. 1: eine Zugmaschine und ein landwirtschaftliches Bodenbearbeitungsgerät während des Ausführens des erfindungsgemäßen Verfahrens;
- Fig. 2: ein Ausführungsbeispiel des erfindungsgemäßen landwirtschaftlichen Bodenbearbeitungsgeräts; und
- Fig. 3: ein Ausführungsbeispiel einer Pflugkörperanordnung des erfindungsgemäßen landwirtschaftlichen Bodenbearbeitungsgeräts.

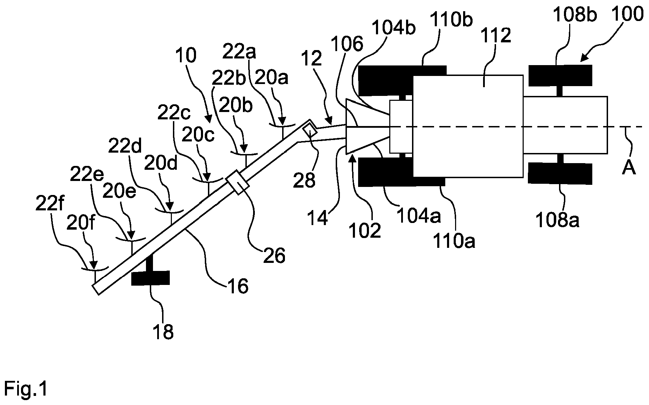

Die Fig. 1 zeigt eine als Traktor ausgebildete Zugmaschine 100 und ein als Anbaudrehpflug ausgebildetes landwirtschaftliches Bodenbearbeitungsgerät 10 während des Ausführens des erfindungsgemäßen Verfahrens.

Das landwirtschaftliche Bodenbearbeitungsgerät 10 weist eine Kupplungseinheit 12 mit einer Unterlenkertraverse 14 auf. Die Unterlenkertraverse 14 ist mit den Unterlenkern 104a, 104b einer Kupplungseinrichtung 102 der Zugmaschine 100 gekoppelt. Die Unterlenkertraverse 14 entspricht somit einer Achse, welche die Koppelpunkte des ersten Unterlenkers 104a und des zweiten Unterlenkers 104b der Kupplungseinrichtung 102 der Zugmaschine 100 miteinander verbindet. Die Kupplungseinrichtung 102 der Zugmaschine 100 ist als Dreipunkt-Kraftheber ausgebildet und umfasst demnach zusätzlich zu den Unterlenkern 104a, 104b einen Oberlenker 106.

An der Kupplungseinheit 12 des landwirtschaftlichen Bodenbearbeitungsgeräts 10 ist ein Tragrahmen 16 befestigt, wobei die Ausrichtung der Kupplungseinheit 12 des landwirtschaftlichen Bodenbearbeitungsgeräts 10 zu dem Tragrahmen 16 veränderbar ist. An dem Tragrahmen 16 ist eine Radaufhängung befestigt, welche mit einem Stützrad 18 verbunden ist. Das Stützrad 18 kann das landwirtschaftliche Bodenbearbeitungsgerät 10 gegenüber dem zu bearbeitenden Ackerboden abstützen.

An dem Tragrahmen 16 sind insgesamt sechs Pflugkörperanordnungen 20a-20f befestigt, wobei die Pflugkörperanordnungen 20a-20f jeweils ein Führungselement 22a-22f umfassen. Die als Anlagebleche ausgebildeten Führungselemente 22a-22f sind während des Bearbeitungsvorgangs in Kontakt mit dem zu bearbeitenden Ackerboden und sorgen für die Seitenführung des landwirtschaftlichen Bodenbearbeitungsgeräts 10.

Die Zugmaschine 100 weist neben der Kupplungseinrichtung 102 zwei Vorderräder 108a, 108b, zwei Hinterräder 110a, 110b und eine Führerkabine 112 auf.

Mittels einer Erfassungseinrichtung 28 wird während des Verfahrens zum Einstellen der Zuglinie zwischen der Zugmaschine 100 und dem von der Zugmaschine 100 getragenen landwirtschaftlichen Bodenbearbeitungsgerät 10 die Ausrichtung der Unterlenker 104a, 104b und/oder des Oberlenkers 106 der Kupplungseinrichtung 102 der Zugmaschine 100 erfasst.

Über eine Steuerungseinrichtung 26 wird dann die Ausrichtung der Führungselemente 22a-22f des landwirtschaftlichen Bodenbearbeitungsgeräts 10 relativ zu dem Tragrahmen 16 des landwirtschaftlichen Bodenbearbeitungsgeräts 10 in Abhängigkeit der erfassten Ausrichtung der Unterlenker 104a, 104b und/oder des Oberlenkers 106 der Kupplungseinrichtung 102 der Zugmaschine 100 selbsttätig eingestellt. Das Einstellen der Ausrichtung der Führungselemente 22a-22f des landwirtschaftlichen Bodenbearbeitungsgeräts 10 relativ zu dem Tragrahmen 16 des landwirtschaftlichen Bodenbearbeitungsgeräts 10 umfasst dabei ein Verdrehen der Führungselemente 22a-22f des landwirtschaftlichen Bodenbearbeitungsgeräts 10.

Durch das Einstellen eines geänderten Drehwinkels an den Führungselementen 22a-22f des landwirtschaftlichen Bodenbearbeitungsgeräts 10 wird die Zuglinie zwischen der Zugmaschine 100 und dem landwirtschaftlichen Bodenbearbeitungsgerät 10 verändert. Das Verändern der Zuglinie zwischen der Zugmaschine 100 und dem landwirtschaftlichen Bodenbearbeitungsgerät 10 erfolgt dadurch, dass das Verdrehen der Führungselemente 22a-22f des landwirtschaftlichen Bodenbearbeitungsgeräts 10 eine geringe Verdrehung des gesamten landwirtschaftlichen Bodenbearbeitungsgeräts 10 um eine aufrechte Achse relativ zu der Zugmaschine 100 bewirkt, um die Führungselemente 22a-22f des landwirtschaftlichen Bodenbearbeitungsgeräts 10 wieder annähernd parallel zur Fahrtrichtung auszurichten. Hierdurch wird der Verschleiß, der Schlupf an der Zugmaschine 100 und der Kraftstoffverbrauch verringert.

Das durch die Steuerungseinrichtung 26 veranlasste selbsttätige Einstellen der Ausrichtung der Führungselemente 22a-22f des landwirtschaftlichen Bodenbearbeitungsgeräts 10 relativ zu dem Tragrahmen 16 des landwirtschaftlichen Bodenbearbeitungsgeräts 10 erfolgt dabei derart, dass die Kupplungseinheit 12 des landwirtschaftlichen Bodenbearbeitungsgeräts 10 die Unterlenker 104a, 104b der Kupplungseinrichtung 102 der Zugmaschine 100 im Wesentlichen symmetrisch zu der Mittelachse A der Zugmaschine 100 und den Oberlenker 106 der Kupplungseinrichtung 102 der Zugmaschine 100 im Wesentlichen parallel oder fluchtend zu der Mittelachse A der Zugmaschine 100 ausrichtet.

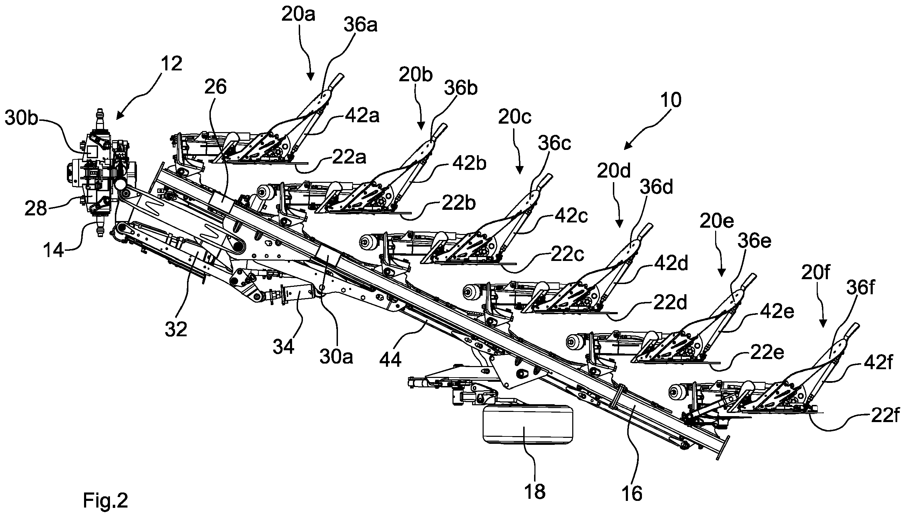

Die Fig. 2 zeigt ein als Anbaudrehpflug ausgebildetes landwirtschaftliches Bodenbearbeitungsgerät 10. Das landwirtschaftliche Bodenbearbeitungsgerät 10 umfasst eine Kupplungseinheit 12, welche dazu eingerichtet ist, mit einer Kupplungseinrichtung 102 einer Zugmaschine 100 verbunden zu werden, und einen schwenkbar mit der Kupplungseinheit 12 verbundenen Tragrahmen 16. An dem Tragrahmen 16 sind Pflugkörperanordnungen 20a-20f befestigt, welche jeweils ein als Anlageblech ausgebildetes Führungselement 22a-22f aufweisen.

Die Verstellung der Führungselemente 22a-22f gegenüber dem Tragrahmen 16 erfolgt derart, dass beim Ausrichten der Führungselemente 22a-22f gegenüber dem Tragrahmen 16 gleichzeitig die jeweiligen Pflugkörpern 36a-36f gegenüber dem Tragrahmen 16 ausgerichtet werden. Dabei sind jeweils ein Führungselement 22a-22f und ein Pflugkörper 36a-36f einer Verstelleinheit zugeordnet, welche einheitlich mittels einer zentralen Verstelleinrichtung 44 gegenüber dem Tragrahmen 16 verdreht werden kann. Die zentrale Verstelleinrichtung 44 kann eine Stange umfassen, welche parallel zum Tragrahmen 16 verläuft und mit sämtlichen Verstelleinheiten verbunden ist. Durch Verschieben der Stange der zentralen Verstelleinrichtung 44 werden sämtliche Führungselemente 22a-22f und sämtliche Pflugkörper 36a-36f gemeinsam verdreht. Die Verschiebung der Stange kann beispielsweise über ein als Stellzylinder, insbesondere als Hydraulikzylinder, ausgebildetes längenveränderliches Einstellglied erfolgen. Zwischen den Pflugkörpern 36a-36f und den Führungselementen 22a-22f ist jeweils eine Spanneinrichtung 42a-42f angeordnet. Die Spanneinrichtungen 42a-42f weisen jeweils eine Drehspindel auf, mittels welcher die Pflugkörper 36a-36f unter Spannung gesetzt werden können. Durch die Spannungsbeaufschlagung können die Pflugkörper 36a-36f geringfügig gebogen werden, sodass fertigungsbedingte Unterschiede bei den Abständen der Pflugkörper 36a-36f zueinander durch die Spanneinrichtungen 42a-42f ausgeglichen oder reduziert werden können.

Das landwirtschaftliche Bodenbearbeitungsgerät 10 kann außerdem eine Parallelverstelleinrichtung 32 für den Tragrahmen 16 und eine Winkelverstelleinrichtung 34 für den Tragrahmen 16 umfassen. Die Parallelverstelleinrichtung 32 umfasst einen Einstellzylinder und ist dazu eingerichtet, den Tragrahmen 16 des landwirtschaftlichen Bodenbearbeitungsgeräts 10 auf Grundlage eines entsprechenden Steuerungsbefehls ohne eine Winkelveränderung seitlich zu verschieben. Die Winkelverstelleinrichtung 34 umfasst ebenfalls einen Einstellzylinder und ist dazu eingerichtet, die Ausrichtung des Tragrahmens 16 des landwirtschaftlichen Bodenbearbeitungsgeräts 10 durch ein Verdrehen des Tragrahmens 16 um eine aufrechte Achse auf Grundlage eines entsprechenden Steuerungsbefehls zu ändern.

Die Steuerungseinrichtung 26 ist mit drei unterschiedlichen Erfassungseinrichtungen 28, 30a, 30b verbunden.

Die Erfassungseinrichtung 28 ist dazu eingerichtet, die Ausrichtung der Unterlenker 104a, 104b und/oder des Oberlenkers 106 der Kupplungseinrichtung 102 der Zugmaschine 100 zu erfassen. Hierzu kann die Erfassungseinrichtung 28 beispielswiese als einen oder mehrere Winkelsensoren, Neigungssensoren, Wegmesssensoren und/oder Kameras umfassen. Die Erfassungseinrichtung 30a ist dazu eingerichtet, die Neigung der zu bearbeitenden Fläche zu erfassen. Die Erfassungseinrichtung 30b ist dazu eingerichtet, das Spurinnenmaß der Zugmaschine 100 und die Arbeitsbreite des landwirtschaftlichen Bodenbearbeitungsgeräts 10 zu erfassen.

Die Steuerungseinrichtung 26 ist dazu eingerichtet, einen Steuerungsbefehl zum selbsttätigen Einstellen der Ausrichtung der Führungselemente 22a-22f relativ zu dem Tragrahmen 16 in Abhängigkeit der Ausrichtung der Lenker 104a, 104b, 106 der Kupplungseinrichtung 102 der Zugmaschine 100, der Neigung der zu bearbeitenden Fläche, des Spurinnenmaßes der Zugmaschine 100 und der Arbeitsbreite des landwirtschaftlichen Bodenbearbeitungsgeräts 10 zu erzeugen.

Der Steuerungsbefehl wird dann der zentralen Verstelleinrichtung 44 zur Verfügung gestellt, welche die Führungselemente 22a-22f dann relativ zu dem Tragrahmen 16 verdreht.

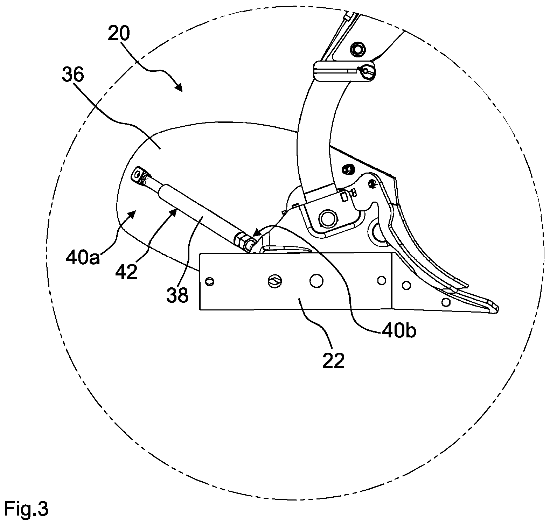

Die Fig. 3 zeigt eine optionale Konfiguration, bei welcher das als Anlageblech ausgebildete Führungselement 22 der Pflugkörperanordnung 20 über eine Spanneinrichtung 42 mit dem Pflugkörper 36 verbunden ist. Die Spanneinrichtung 42 umfasst eine Drehspindel 38, mittels welcher der Pflugkörper 36 unter Spannung gesetzt werden kann. Die Drehspindel 38 ist über Verbindungsstreben mit den Befestigungen 40a, 40b verbunden, wobei die Befestigung 40a an dem Pflugkörper 36 und die Befestigung 40b an dem Führungselement 22 angeordnet ist.

### Bezugszeichenliste

- 10: landwirtschaftliches Bodenbearbeitungsgerät
- 12: Kupplungseinheit
- 14: Unterlenkertraverse
- 16: Tragrahmen
- 18: Stützrad
- 20, 20a-20f: Pflugkörperanordnungen
- 22, 22a-22f: Führungselemente
- 26: Steuerungseinrichtung
- 28: Erfassungseinrichtung
- 30a, 30b: Erfassungseinrichtungen
- 32: Parallelverstelleinrichtung
- 34: Winkelverstelleinrichtung
- 36, 36a-36f: Pflugkörper
- 38: Drehspindel
- 40a, 40b: Befestigung
- 42, 42a-42f: Spanneinrichtung
- 44: zentrale Verstelleinrichtung

- 100: Zugmaschine
- 102: Kupplungseinrichtung
- 104a, 104b: Unterlenker
- 106: Oberlenker
- 108a, 108b: Vorderräder
- 110a, 110b: Hinterräder
- 112: Führerkabine

- A: Mittelachse

## Patentansprüche

1. Verfahren zum Einstellen einer Zuglinie zwischen einer Zugmaschine (100) und einem von der Zugmaschine (100) gezogenen oder getragenen landwirtschaftlichen Bodenbearbeitungsgerät (10), insbesondere einem Pflug, **gekennzeichnet durch** die Schritte:
- Erfassen der Ausrichtung eines oder mehrerer Lenker (104a, 104b, 106) einer Kupplungseinrichtung (102) der Zugmaschine (100); und
- selbsttätiges Einstellen der Ausrichtung mehrerer Führungselemente (22, 22a-22f) des landwirtschaftlichen Bodenbearbeitungsgeräts (10), welche mit dem zu bearbeitenden Boden in Kontakt stehen, relativ zu einem Tragrahmen (16) des landwirtschaftlichen Bodenbearbeitungsgeräts (10) in Abhängigkeit der erfassten Ausrichtung des einen oder der mehreren Lenker (104a, 104b, 106) der Kupplungseinrichtung (102) der Zugmaschine (100).

2. Verfahren nach Anspruch 1,
**dadurch gekennzeichnet, dass** die Führungselemente (22, 22a-22f) jeweils als Anlageblech einer Pflugkörperanordnung (20, 20a-20f) ausgebildet und die jeweiligen Pflugkörperanordnungen (20, 20a-20f) an dem Tragrahmen (16) des landwirtschaftlichen Bodenbearbeitungsgeräts (10) befestigt sind.

3. Verfahren nach Anspruch 1 oder 2,
**dadurch gekennzeichnet, dass** das selbsttätige Einstellen der Ausrichtung der Führungselemente (22, 22a-22f) des landwirtschaftlichen Bodenbearbeitungsgeräts (10) relativ zu dem Tragrahmen (16) des landwirtschaftlichen Bodenbearbeitungsgeräts (10) ein Verdrehen der Führungselemente (22, 22a-22f) des landwirtschaftlichen Bodenbearbeitungsgeräts (10) relativ zu dem Tragrahmen (16) des landwirtschaftlichen Bodenbearbeitungsgeräts (10) umfasst.

4. Verfahren nach einem der vorstehenden Ansprüche,
**dadurch gekennzeichnet, dass** das Erfassen der Ausrichtung des einen oder der mehreren Lenker (104a, 104b, 106) der Kupplungseinrichtung (102) der Zugmaschine (100) zumindest einen der folgenden Schritte umfasst:
- Erfassen der Ausrichtung eines ersten Unterlenkers (104a) der Kupplungseinrichtung (102) der Zugmaschine (100);
- Erfassen der Ausrichtung eines zweiten Unterlenkers (104a) der Kupplungseinrichtung (102) der Zugmaschine (100);
- Erfassen der Ausrichtung einer Achse, welche die Koppelpunkte des ersten Unterlenkers (104a) und des zweiten Unterlenkers (104b) der Kupplungseinrichtung (102) der Zugmaschine (100) miteinander verbindet;
- Erfassen der Ausrichtung eines Oberlenkers (106) der Kupplungseinrichtung (102) der Zugmaschine (100).

5. Verfahren nach einem der vorstehenden Ansprüche,
**dadurch gekennzeichnet, dass** das Erfassen der Ausrichtung des einen oder der mehreren Lenker (104a, 104b, 106) der Kupplungseinrichtung (102) der Zugmaschine (100) mittels einer Winkelmesseinrichtung und/oder einer Wegmesseinrichtung erfolgt.

6. Verfahren nach einem der vorstehenden Ansprüche,
**dadurch gekennzeichnet, dass** das selbsttätige Einstellen der Ausrichtung der Führungselemente (22, 22a-22f) des landwirtschaftlichen Bodenbearbeitungsgeräts (10) relativ zu dem Tragrahmen (16) des landwirtschaftlichen Bodenbearbeitungsgeräts (10) derart erfolgt, dass die Kupplungseinheit (12) des landwirtschaftlichen Bodenbearbeitungsgeräts (10) die Unterlenker (104a, 104b) der Kupplungseinrichtung (102) der Zugmaschine (100) im Wesentlichen symmetrisch zu der Mittelachse (A) der Zugmaschine (100) ausrichtet.

7. Verfahren nach einem der vorstehenden Ansprüche,
**dadurch gekennzeichnet, dass** das selbsttätige Einstellen der Ausrichtung der Führungselemente (22, 22a-22f) des landwirtschaftlichen Bodenbearbeitungsgeräts (10) relativ zu dem Tragrahmen (16) des landwirtschaftlichen Bodenbearbeitungsgeräts (10) mittels eines oder mehrerer längenveränderlicher Einstellglieder erfolgt.

8. Verfahren nach einem der vorstehenden Ansprüche,
**gekennzeichnet durch** zumindest einen der folgenden Schritte:
- Erfassen der Neigung der zu bearbeitenden Fläche;
- Erfassen der Neigung der Zugmaschine (100);
- Erfassen der Verwendung eines Zusatzgerätes, insbesondere eines Packers;
wobei das selbsttätige Einstellen der Ausrichtung der Führungselemente (22, 22a-22f) des landwirtschaftlichen Bodenbearbeitungsgeräts (10) relativ zu dem Tragrahmen (16) des landwirtschaftlichen Bodenbearbeitungsgeräts (10) zusätzlich in Abhängigkeit der Neigung der zu bearbeitenden Fläche, der Neigung der Zugmaschine (100) und/oder der Verwendung eines Zusatzgerätes, insbesondere eines Packers, erfolgt.

9. Verfahren nach einem der vorstehenden Ansprüche,
**gekennzeichnet durch** zumindest einen der folgenden Schritte:
- Erfassen der Spurbreite und/oder des Spurinnenmaßes der Zugmaschine (100);
- Erfassen der Arbeitsbreite des landwirtschaftlichen Bodenbearbeitungsgeräts (10);
- Erfassen der Vorderfurchenbreite des landwirtschaftlichen Bodenbearbeitungsgeräts (10);
wobei das selbsttätige Einstellen der Führungselemente (22, 22a-22f) des landwirtschaftlichen Bodenbearbeitungsgeräts (10) relativ zu dem Tragrahmen (16) des landwirtschaftlichen Bodenbearbeitungsgeräts (10) zusätzlich in Abhängigkeit der Spurbreite und/oder des Spurinnenmaßes der Zugmaschine (100), der Arbeitsbreite des landwirtschaftlichen Bodenbearbeitungsgeräts (10) und/oder der Vorderfurchenbreite des landwirtschaftlichen Bodenbearbeitungsgeräts (10) erfolgt.

10. System umfassend eine Zugmaschine und ein landwirtschaftliches Bodenbearbeitungsgerät (10), insbesondere Pflug, mit
- einer Kupplungseinheit (12), welche dazu eingerichtet ist, mit einer Kupplungseinrichtung (102) der Zugmaschine (100) verbunden zu werden; und
- einem schwenkbar mit der Kupplungseinheit (12) verbundenen Tragrahmen (16);
**gekennzeichnet durch** eine Steuerungseinrichtung (26), welche dazu eingerichtet ist, einen Steuerungsbefehl zum selbsttätigen Einstellen der Ausrichtung mehrerer Führungselemente (22, 22a-22f), welche im Betrieb des landwirtschaftlichen Bodenbearbeitungsgeräts (10) mit dem zu bearbeitenden Boden in Kontakt stehen, relativ zu dem Tragrahmen (16) in Abhängigkeit der Ausrichtung eines oder mehrerer Lenker (104a, 104b, 106) der Kupplungseinrichtung (102) der Zugmaschine (100) zu erzeugen.

11. System nach Anspruch 10, **dadurch gekennzeichnet, dass** die Führungselemente (22, 22a-22f) jeweils als Anlageblech einer Pflugkörperanordnung (20, 20a-20f) ausgebildet und die jeweiligen Pflugkörperanordnungen (20, 20a-20f) an dem Tragrahmen (16) des landwirtschaftlichen Bodenbearbeitungsgeräts (10) befestigt sind.

12. System nach Anspruch 10 oder 11, **gekennzeichnet dadurch, dass** das Bodenbearbeitungsgerät (10) eine Erfassungseinrichtung (28) aufweist, (20), welche dazu eingerichtet ist, die Ausrichtung des einen oder der mehreren Lenker (104a, 104b, 106) der Kupplungseinrichtung (102) der Zugmaschine (100) zu erfassen.

13. System nach einem der Ansprüche 10 bis 12, **gekennzeichnet dadurch, dass** das Bodenbearbeitungsgerät (10) ein oder mehrere längenveränderliche Einstellglieder aufweist , welche signalleitend mit der Steuerungseinrichtung (26) verbunden und dazu eingerichtet sind, die Ausrichtung der Führungselemente (22, 22a-22f) relativ zu dem Tragrahmen (16) auf Grundlage des Steuerungsbefehls der Steuerungseinrichtung (26) einzustellen.

14. System nach einem der Ansprüche 10 bis 13, **gekennzeichnet dadurch, dass** das Bodenbearbeitungsgerät (10) eine Erfassungseinrichtung (30a) aufweist, welche dazu eingerichtet ist, die Neigung der zu bearbeitenden Fläche, die Neigung der Zugmaschine (100) und/oder die Verwendung eines Zusatzgerätes, insbesondere eines Packers, zu erfassen, wobei die Steuerungseinrichtung (26) dazu eingerichtet ist, den Steuerungsbefehl zum selbsttätigen Einstellen der Ausrichtung der Führungselemente (22, 22a-22f) relativ zu dem Tragrahmen (16) auch in Abhängigkeit der Neigung der zu bearbeitenden Fläche, der Neigung der Zugmaschine (100) und/oder der Verwendung eines Zusatzgerätes, insbesondere eines Packers, zu erzeugen.

15. System nach einem der Ansprüche 10 bis 14, **gekennzeichnet dadurch, dass** das Bodenbearbeitungsgerät (10) eine Erfassungseinrichtung (30b) aufweist, welche dazu eingerichtet ist, die Spurbreite und/oder das Spurinnenmaß der Zugmaschine (100), die Arbeitsbreite des landwirtschaftlichen Bodenbearbeitungsgeräts (10) und/oder die Vorderfurchenbreite des landwirtschaftlichen Bodenbearbeitungsgeräts (10) zu erfassen, wobei die Steuerungseinrichtung (26) dazu eingerichtet ist, den Steuerungsbefehl zum selbsttätigen Einstellen der Ausrichtung der Führungselemente (22, 22a-22f) relativ zu dem Tragrahmen (16) auch in Abhängigkeit der Spurbreite und/oder des Spurinnenmaßes der Zugmaschine (100), der Arbeitsbreite des landwirtschaftlichen Bodenbearbeitungsgeräts (10) und/oder der Vorderfurchenbreite des landwirtschaftlichen Bodenbearbeitungsgeräts (10) zu erzeugen.

## Claims

1. Method for adjusting a pull line between a tractor (100) and an agricultural ground processing apparatus (10) which is pulled or carried by the tractor (100), in particular a plow, **characterized by** the steps of:
- detecting the alignment of one or more connecting pieces (104a, 104b, 106) of a coupling device (102) of the tractor (100); and
- automatically adjusting the alignment of a plurality of guide elements (22, 22a-22f) of the agricultural ground processing apparatus (10) that are in contact with the ground to be processed relative to a support frame (16) of the agricultural ground processing apparatus (10) depending on the detected alignment of the one or more connecting pieces (104a, 104b, 106) of the coupling device (102) of the tractor (100).

2. Method according to claim 1,
**characterized in that** the guide elements (22, 22a-22f) are each designed as a contact plate of a plow body arrangement (20, 20a-20f) and each of the plow body arrangements (20, 20a-20f) are fastened to the support frame (16) of the agricultural ground processing apparatus (10).

3. Method according to claim 1 or 2,
**characterized in that** the automatic adjustment of the alignment of the guide elements (22, 22a-22f) of the agricultural ground processing apparatus (10) relative to the support frame (16) of the agricultural ground processing apparatus (10) comprises a rotation of the guide elements (22, 22a-22f) of the agricultural ground processing apparatus (10) relative to the support frame (16) of the agricultural ground processing apparatus (10).

4. Method according to any of the preceding claims,
**characterized in that** detecting the alignment of the one or more connecting pieces (104a, 104b, 106) of the coupling device (102) of the tractor (100) comprises at least one of the following steps:
- detecting the alignment of a first lower connecting piece (104a) of the coupling device (102) of the tractor (100);
- detecting the alignment of a second lower connecting piece (104a) of the clutch device (102) of the tractor (100);
- detecting the alignment of an axis which connects the coupling points of the first lower connecting piece (104a) and the second lower connecting piece (104b) of the coupling device (102) of the tractor (100) to one another;
- detecting the alignment of an upper connecting piece (106) of the coupling device (102) of the tractor (100).

5. Method according to any of the preceding claims,
**characterized in that** the alignment of the one or more connecting pieces (104a, 104b, 106) of the coupling device (102) of the tractor (100) is detected by means of an angle measuring device and/or a distance measuring device.

6. Method according to any of the preceding claims,
**characterized in that** the alignment of the guide elements (22, 22a-22f) of the agricultural ground processing apparatus (10) relative to the support frame (16) of the agricultural ground processing apparatus (10) is automatically adjusted such that the coupling unit (12) of the agricultural ground processing apparatus (10) aligns the lower connecting piece (104a, 104b) of the coupling device (102) of the tractor (100) substantially symmetrically to the central axis (A) of the tractor (100).

7. Method according to any of the preceding claims,
**characterized in that** the alignment of the guide elements (22, 22a-22f) of the agricultural ground processing apparatus (10) relative to the support frame (16) of the agricultural ground processing apparatus (10) is automatically adjusted by means of one or more length-variable adjustment members.

8. Method according to any of the preceding claims,
**characterized by** at least one of the following steps:
- detecting the inclination of the surface to be processed;
- detecting the inclination of the tractor (100);
- detecting the use of an auxiliary apparatus, in particular a packer;
the alignment of the guide elements (22, 22a-22f) of the agricultural ground processing apparatus (10) relative to the support frame (16) of the agricultural ground processing apparatus (10) additionally being automatically adjusted depending on the inclination of the surface to be processed, the inclination of the tractor (100) and/or the use of an auxiliary apparatus, in particular a packer.

9. Method according to any of the preceding claims,
**characterized by** at least one of the following steps:
- detecting the track width and/or the track inner dimension of the tractor (100);
- detecting the working width of the agricultural ground processing apparatus (10);
- detecting the front furrow width of the agricultural ground processing apparatus (10);
the guide elements (22, 22a-22f) of the agricultural ground processing apparatus (10) additionally being automatically adjusted relative to the support frame (16) of the agricultural ground processing apparatus (10) depending on the track width and/or the internal track dimension of the tractor (100), the working width of the agricultural ground processing apparatus (10) and/or the front furrow width of the agricultural ground processing apparatus (10).

10. System comprising a tractor and an agricultural ground processing apparatus (10), in particular a plow, having
- a coupling unit (12) which is configured to be connected to a coupling device (102) of the tractor (100); and
- a support frame (16) which is pivotally connected to the coupling unit (12);
**characterized by** a control device (26) which is configured to generate a control command for automatically adjusting the alignment of a plurality of guide elements (22, 22a-22f), which are in contact with the ground during operation of the agricultural ground processing apparatus (10), relative to the support frame (16) depending on the alignment of one or more connecting pieces (104a, 104b, 106) of the coupling device (102) of the tractor (100).

11. System according to claim 10,
**characterized in that** the guide elements (22, 22a-22f) are each designed as a contact plate of a plow body arrangement (20, 20a-20f) and each of the plow body arrangements (20, 20a-20f) are fastened to the support frame (16) of the agricultural ground processing apparatus (10).

12. System according to either claim 10 or claim 11,
**characterized in that** the ground processing apparatus (10) has a detection device (28) which is configured to detect the alignment of the one or more connecting pieces (104a, 104b, 106) of the coupling device (102) of the tractor (100).

13. System according to any of claims 10 to 12,
**characterized in that** the ground processing apparatus (10) has one or more length-variable adjustment members which are connected in a signalconducting manner to the control device (26) and are configured to adjust the alignment of the guide elements (22, 22a-22f) relative to the support frame (16) on the basis of the control command of the control device (26).

14. System according to any of claims 10 to 13,
**characterized in that** the ground processing apparatus (10) has a detection device (30a) which is configured to detect the inclination of the surface to be processed, the inclination of the tractor (100) and/or the use of an auxiliary apparatus, in particular a packer, the control device (26) being configured to generate the control command for automatically adjusting the alignment of the guide elements (22, 22a-22f) relative to the support frame (16) also depending on the inclination of the surface to be processed, the inclination of the tractor (100) and/or the use of an auxiliary apparatus, in particular a packer.

15. System according to any of claims 10 to 14,
**characterized in that** the ground processing apparatus (10) has a detection device (30b) which is configured to detect the track width and/or the track inner dimension of the tractor (100), the working width of the agricultural ground processing apparatus (10) and/or the front furrow width of the agricultural ground processing apparatus (10), the control device (26) being configured to generate the control command for automatically adjusting the alignment of the guide elements (22, 22a-222f) relative to the support frame (16) depending on the track width and/or the inner track dimension of the tractor (100), the working width of the agricultural ground processing apparatus (10) and/or the front furrow width of the agricultural ground processing apparatus (10).

## Revendications

1. Procédé de réglage d'une ligne de traction entre une machine de traction (100) et un appareil agricole de travail du sol (10) tiré ou porté par la machine de traction (100), en particulier une charrue, **caractérisé par** les étapes :
- détection de l'orientation d'un ou de plusieurs bras (104a, 104b, 106) d'un dispositif d'accouplement (102) de la machine de traction (100) ; et
- réglage automatique de l'orientation de plusieurs éléments de guidage (22, 22a-22f) de l'appareil agricole de travail du sol (10), qui sont en contact avec le sol à travailler, par rapport à un cadre support (16) de l'appareil agricole de travail du sol (10) en fonction de l'orientation détectée dudit un ou desdits plusieurs bras (104a, 104b, 106) du dispositif d'accouplement (102) de la machine de traction (100).

2. Procédé selon la revendication 1,
**caractérisé en ce que** les éléments de guidage (22, 22a-22f) sont à chaque fois conçus comme tôle d'appui d'un agencement de corps de charrue (20, 20a-20f) et les agencements de corps de charrue (20, 20a-20f) respectifs sont fixés au cadre support (16) de l'appareil agricole de travail du sol (10).

3. Procédé selon la revendication 1 ou 2,
**caractérisé en ce que** le réglage automatique de l'orientation des éléments de guidage (22, 22a-22f) de l'appareil agricole de travail du sol (10) par rapport au cadre support (16) de l'appareil agricole de travail du sol (10) comprend une rotation des éléments de guidage (22, 22a-22f) de l'appareil agricole de travail du sol (10) par rapport au cadre support (16) de l'appareil agricole de travail du sol (10).

4. Procédé selon l'une quelconque des revendications précédentes,
**caractérisé en ce que** la détection de l'orientation dudit un ou desdits plusieurs bras (104a, 104b, 106) du dispositif d'accouplement (102) de la machine de traction (100) comprend au moins l'une des étapes suivantes :
- détection de l'orientation d'un premier bras inférieur (104a) du dispositif d'accouplement (102) de la machine de traction (100) ;
- détection de l'orientation d'un deuxième bras inférieur (104a) du dispositif d'accouplement (102) de la machine de traction (100) ;
- détection de l'orientation d'un axe, qui relie l'un à l'autre les points d'accouplement du premier bras inférieur (104a) et du deuxième bras inférieur (104b) du dispositif d'accouplement (102) de la machine de traction (100) ;
- détection de l'orientation d'un bras supérieur (106) du dispositif d'accouplement (102) de la machine de traction (100).

5. Procédé selon l'une quelconque des revendications précédentes,
**caractérisé en ce que** la détection de l'orientation dudit un ou desdits plusieurs bras (104a, 104b, 106) du dispositif d'accouplement (102) de la machine de traction (100) a lieu au moyen d'un dispositif de mesure d'angle et/ou d'un dispositif de mesure de déplacement.

6. Procédé selon l'une quelconque des revendications précédentes,
**caractérisé en ce que** le réglage automatique de l'orientation des éléments de guidage (22, 22a-22f) de l'appareil agricole de travail du sol (10) par rapport au cadre support (16) de l'appareil agricole de travail du sol (10) a lieu de manière telle que l'unité d'accouplement (12) de l'appareil agricole de travail du sol (10) oriente les bras inférieurs (104a, 104b) du dispositif d'accouplement (102) de la machine de traction (100) de manière sensiblement symétrique par rapport à l'axe central (A) de la machine de traction (100).

7. Procédé selon l'une quelconque des revendications précédentes,
**caractérisé en ce que** le réglage automatique de l'orientation des éléments de guidage (22, 22a-22f) de l'appareil agricole de travail du sol (10) par rapport au cadre support (16) de l'appareil agricole de travail du sol (10) a lieu au moyen d'un ou de plusieurs organes de réglage à longueur modifiable.

8. Procédé selon l'une quelconque des revendications précédentes,
**caractérisé par** au moins l'une des étapes suivantes :
- détection de l'inclinaison de la surface à travailler ;
- détection de l'inclinaison de la machine de traction (100) ;
- détection de l'utilisation d'un appareil supplémentaire, en particulier d'un tasseur;
le réglage automatique de l'orientation des éléments de guidage (22, 22a-22f) de l'appareil agricole de travail du sol (10) par rapport au cadre support (16) de l'appareil agricole de travail du sol (10) ayant lieu en plus en fonction de l'inclinaison de la surface à travailler, de l'inclinaison de la machine de traction (100) et/ou de l'utilisation d'un appareil supplémentaire, en particulier d'un tasseur.

9. Procédé selon l'une quelconque des revendications précédentes,
**caractérisé par** au moins l'une des étapes suivantes :
- détection de la largeur voie et/ou de la dimension interne de voie de la machine de traction (100) ;
- détection de la largeur de travail de l'appareil agricole de travail du sol (10) ;
- détection de la largeur de sillon avant de l'appareil agricole de travail du sol (10) ;
le réglage automatique des éléments de guidage (22, 22a-22f) de l'appareil agricole de travail du sol (10) par rapport au cadre support (16) de l'appareil agricole de travail du sol (10) ayant lieu en plus en fonction de la largeur de voie et/ou de la dimension interne de voie de la machine de traction (100), de la largeur de travail de l'appareil agricole de travail du sol (10) et/ou de la largeur de sillon avant de l'appareil agricole de travail du sol (10).

10. Système comprenant une machine de traction et un appareil agricole de travail du sol (10), en particulier une charrue, présentant
- une unité d'accouplement (12), qui est conçue pour être reliée à un dispositif d'accouplement (102) de la machine de traction (100) ; et
- un cadre support (16) relié de manière pivotante à l'unité d'accouplement (12) ;
**caractérisé par** un dispositif de commande (26), qui est conçu pour générer une instruction de commande pour le réglage automatique de l'orientation de plusieurs éléments de guidage (22, 22a-22f), qui sont en contact avec le sol à travailler lors du fonctionnement de l'appareil agricole de travail du sol (10), par rapport au cadre support (16) en fonction de l'orientation d'un ou de plusieurs bras (104a, 104b, 106) du dispositif d'accouplement (102) de la machine de traction (100).

11. Système selon la revendication 10,
**caractérisé en ce que** les éléments de guidage (22, 22a-22f) sont à chaque fois conçus comme tôle d'appui d'un agencement de corps de charrue (20, 20a-20f) et les agencements de corps de charrue (20, 20a-20f) respectifs sont fixés au cadre support (16) de l'appareil agricole de travail du sol (10).

12. Système selon la revendication 10 ou 11,
**caractérisé en ce que** l'appareil de travail du sol (10) présente un dispositif de détection (28), qui est conçu pour détecter l'orientation dudit un ou desdits plusieurs bras (104a, 104b, 106) du dispositif d'accouplement (102) de la machine de traction (100).

13. Système selon l'une quelconque des revendications 10 à 12,
**caractérisé en ce que** l'appareil de travail du sol (10) présente un ou plusieurs organes de réglage à longueur variable, qui sont reliés de manière à transmettre un signal au dispositif de commande (26) et qui sont conçus pour régler l'orientation des éléments de guidage (22, 22a-22f) par rapport au cadre support (16) sur la base de l'instruction de commande du dispositif de commande (26).

14. Système selon l'une quelconque des revendications 10 à 13,
**caractérisé en ce que** l'appareil de travail du sol (10) présente un dispositif de détection (30a) qui est conçu pour détecter l'inclinaison de la surface à travailler, l'inclinaison de la machine de traction (100) et/ou l'utilisation d'un appareil supplémentaire, en particulier d'un tasseur, le dispositif de commande (26) étant conçu pour générer l'instruction de commande pour le réglage automatique de l'orientation des éléments de guidage (22, 22a-22f) par rapport au cadre support (16) également en fonction de l'inclinaison de la surface à travailler, de l'inclinaison de la machine de traction (100) et/ou de l'utilisation d'un appareil supplémentaire, en particulier d'un tasseur.

15. Système selon l'une quelconque des revendications 10 à 14,
**caractérisé en ce que** l'appareil de travail du sol (10) présente un dispositif de détection (30b) qui est conçu pour détecter la largeur de voie et/ou la dimension interne de voie de la machine de traction (100), la largeur de travail de l'appareil agricole de travail du sol (10) et/ou la largeur du sillon avant de l'appareil agricole de travail du sol (10), le dispositif de commande (26) étant conçu pour générer l'instruction de commande pour le réglage automatique de l'orientation des éléments de guidage (22, 22a-22f) par rapport au cadre support (16) également en fonction de la largeur de voie et/ou de la dimension interne de voie de la machine de traction (100), de la largeur de travail de l'appareil agricole de travail du sol (10) et/ou de la largeur du sillon avant de l'appareil agricole de travail du sol (10).
